# EUROPÄISCHE PATENTSCHRIFT

(11) **EP 1 352 229 B1**
(45) Veröffentlichungstag und Bekanntmachung des Hinweises auf die Patenterteilung: **22.09.2004**
(21) Anmeldenummer: 02702267.2
(22) Anmeldetag: 15.01.2002
(51) Int. Cl.: G01N 21/47, G01J 3/50

(54) **MESSEINRICHTUNG**
MEASURING DEVICE
DISPOSITIF DE MESURE

(30) Priorität: 19.01.2001 DE 10103163
(43) Veröffentlichungstag der Anmeldung: 15.10.2003
(73) Patentinhaber: Steag Eta-Optik GMBH, 52525 Heinsberg (DE)
(72) Erfinder: KUBITZEK, Rüdiger, 52511 Geilenkirchen (DE)
(74) Vertreter: Wagner & Geyer
(86) Internationale Anmeldenummer: PCT/EP2002/000322
(87) Internationale Veröffentlichungsnummer: WO 2002/057755

(56) Entgegenhaltungen:
- WO-A-96/13709
- US-A- 5 754 283
- US-A- 6 097 025
- PATENT ABSTRACTS OF JAPAN vol. 1998, no. 07, 31. März 1998 (1998-03-31) & JP 07 218344 A (X RITE INC), 18. August 1995 (1995-08-18)

## Beschreibung

Die Erfindung betrifft eine Meßeinrichtung mit mindestens einer, mindestens einen optischen Sender und mindestens einen optischen Empfänger aufweisenden Meßeinheit und mindestens einer mit der Meßeinheit über einen Lichtleiter verbundenen Lichtquelle sowie einem mit der Meßeinheit über einen Lichtleiter verbundenen Detektor.

Bekannte Systeme sind z.B. zufinden in US 5 754 283, US 6 097 025 order JP 7-218 344.

Bekannte Farbmeßsysteme weisen eine einzelne feste Sende- und Empfangsanordnung auf. Dabei wird gewöhnlich nur eine Lichtquelle und nur ein Detektor verwendet. Die Beleuchtung erfolgt häufig mit Halogenlichtquellen oder Xenonlichtquellen im Puls- oder Dauerbetrieb. Die Lichtquelle beleuchtet hierbei die Meßprobe direkt, meistens wird sie jedoch an einen Lichtleiter angekoppelt. Der Lichtleiter beleuchtet dann die Probe entweder direkt mittels eines runden Faserbündels, einer Ringlichtanordnung von Fasern oder mehreren Faserbündeln, die aus verschiedenen Richtungen die Meßprobe beleuchten. Es ist weiterhin bekannt, das aus dem Lichtleiter austretende Licht über einen optischen Sender zu parallelisieren, um eine definierte Beleuchtungsrichtung zu erreichen. Als Detektoren werden oft entweder drei Photozellen mit entsprechenden optischen Filtern gemäß dem Dreibereichsverfahren verwendet oder es wird eine drei-elementige Photozelle mit aufgedampften optischen Filtern eingesetzt. Es ist ferner bekannt, Spektralphotometer mit einem Drehgitter einzusetzen oder Dioden-Zeilen- oder CCD-Zeilenspektrometer mit einem festen Gitter zu verwenden. Die Ankopplung des Detektors geschieht meist über einen Lichtleiter. Hierbei kann sich ein parallelisierender optischer Meßkopf, der auch als Empfangsmeßkopf bezeichnet wird, zwischen Meßprobe und Lichtleiter befinden. Bei den genannten Anordnungen wird nur eine feste Beleuchtungs- bzw. Empfangsgeometrie für die Farbmessung an der Probe verwendet.

Darüber hinaus sind Meßeinrichtungen für Farbmeßsysteme bekannt, die unter mehreren Winkeln Charakteristiken, insbesondere die Farbe eines Meßobjektes, messen. Bei einer Art von bekannten Meßsystemen wird entweder mit einem festen Beleuchtungswinkel und mehreren festen Empfangswinkeln oder mit einem festen Empfangswinkel und mehreren festen Beleuchtungswinkeln gemessen. Insbesondere sind bei der Verwendung zur Messung der winkelabhängigen Farbcharakteristiken von neuartigen Lacken und Farben Meßsysteme dieser Bauart unzureichend. Für eine ausreichende Charakterisierung der Farbe kann weder ein einzelner Beleuchtungswinkel noch ein einzelner Empfangswinkel fest vorgegeben werden. Dies bedeutet im allgemeinen, daß mehrere Detektoreinheiten, wie z. B. Spektrometer, und gegebenenfalls auch mehrere Beleuchtungseinheiten verwendet werden müssen, was zu höheren Kosten durch den erhöhten Bauteileaufwand führt. Darüber hinaus müssen sämtliche Meßgeometrien gleichzeitig über der Probe angeordnet werden, wodurch die geometrischen Möglichkeiten zur Anordnung der Meßköpfe eingeschränkt sind und nicht alle gewünschten Beleuchtungswinkel und Empfangswinkel gemessen werden können.

Bei einer zweiten bekannten Meßsystemart lassen sich Beleuchtungswinkel und Empfangswinkel manuell oder motorisiert einstellen. Ein solches Goniometer bietet die Möglichkeit, durch zwei bewegliche Meßköpfe jeden beliebigen Beleuchtungswinkel und Empfangswinkel einzustellen.

Goniometer sind jedoch schwierig zu justieren und aufgrund der Justageanfälligkeit sind sie lediglich für Laboranwendungen, jedoch nicht für routinemäßige Produktionskontrollen einsetzbar. Weiterhin ist der apparative Aufwand bei automatisierten Goniometern mit Motorsteuerung hoch, wodurch die Geräte kostspielig sind. Darüber hinaus sind im allgemeinen Lichtquelle und Detektor über Lichtleiter an die Meßköpfe gekoppelt, so daß eine Bewegung der Meßköpfe zu einer Veränderung in den Biegekurven der Lichtleiter führt und es zu Veränderungen in der spektralen Transmission der optischen Fasern kommt. Daher ergeben sich bei Goniometern Meßungenauigkeiten durch eine Bewegung der Meßköpfe relativ zu der Lichtquelle und dem Detektor, was sich nachteilig auf die Genauigkeit der Farbwertbestimmung auswirkt.

Aufgrund der zunehmenden Verwendung von Lacken und Farben mit winkelabhängiger Farbcharakteristik, d. h. einer Farbcharakteristik, die vom Beleuchtungswinkel sowie vom Betrachtungs- bzw. Empfangswinkel abhängt, steigt die Nachfrage nach präzisen Mehrwinkelfarbmeßgeräten.

Der Erfindung liegt daher die Aufgabe zugrunde, eine Meßeinrichtung zu schaffen, mit der die oben angeführten Nachteile herkömmlicher Meßsysteme vermieden werden und insbesondere eine möglichst genaue Bestimmung der Farbcharakteristiken in Abhängigkeit des Winkels zu bestimmen und dies bei verschiedenen Beleuchtungs- und Empfangsgeometrien.

Die gestellte Aufgabe wird bei der erfindungsgemäßen Meßeinrichtung dadurch gelöst, daß mindestens zwei Meßeinheiten zu einer Meßanordnung zusammengefaßt sind, die Meßeinheiten jeweils Lichtleiter-Anschlüsse aufweisen und diese Anschlüsse mit einer für mindestens zwei Meßeinheiten gemeinsam verbindbaren Lichtquelle bzw. einem für mindestens zwei Meßeinheiten gemeinsam verbindbaren Detektor wahlweise koppelbar sind.

Außerdem ist der Beleuchtungs- und Empfangswinkel des Senders und Empfängers einer Meßeinheit bezüglich eines Meßobjekts für jede Meßeinheit unterschiedlich, um verschiedene Beleuchtungs- und Empfangswinkel für die Farbmessung in ein und derselben Meßeinrichtung zu realisieren.

Ein weiterer Vorteil der vorliegenden Erfindung besteht darin, daß jeder Sender und jeder Empfänger einer Meßeinheit jeweils über einen Sender bzw. Empfangslichtleiter mit dem jeweiligen Anschluß der Meßeinheit verbunden ist und diese vorteilhafterweise in der Meßeinheit starr verlegt sind. Damit entsteht bei einer Bewegung der gesamten Meßeinheit keine Änderung der Biegekurven der Lichtleiter, was andernfalls zu Veränderungen in der spektralen Transmission der optischen Lichtleiter führen könnte und sich nachteilig auf die Genauigkeit der Farbwertbestimmungen auswirken würde.

Gemäß einer weiteren sehr vorteilhaften Ausführungsform der Erfindung werden der Lichtquellen- und Detektorlichtleiter berührungsfrei mit dem jeweiligen Anschluß einer Meßeinheit gekoppelt. Durch Verschieben der Meßeinheiten wird eine Kopplung zwischen dem Lichtquellen- und Detektorlichtleiter eineseits und Lichtleitern verschiedener Meßeinheiten andererseits ermöglicht, was als Fasermultiplexing bezeichnet wird.

Vorteilhaft ist es, wenn zwischen dem Lichtquellen- und Detektorlichtleiter einerseits und dem Anschluß der Meßeinheit andererseits eine optische Kopplungseinrichtung vorgesehen ist. Dies ermöglicht eine genaue und zuverlässige Kopplung zwischen den Lichtleitern.

Eine weitere, sehr vorteilhafte Ausführungsform der Erfindung besteht darin, daß die Meßanordnung bezüglich des Meßobjekts beweglich angeordnet ist. Durch ein Bewegen der in der Meßanordnung zusammengefaßten Meßeirheiten kann eine beliebige Meßeinheit zur Probe gefahren werden. Dies wird als Meßkopfmultiplexing bezeichnet.

Gemäß einer weiteren vorteilhaften Ausführungsform der Erfindung ist die Bewegung der Meßanordnung linear oder alternativ eine Drehbewegung.

Vorzugsweise werden die Lichtquellen- und Detektorlichtleiter bei Bewegung der Meßanordnung mit jeweiligen Anschlüssen unterschiedlicher Meßeinheiten gekoppelt, um das zuvor genannte Fasermultiplexing zu gewährleisten.

Bei einem Ausführungsbeispiel der Erfindung befindet sich die jeweilige Meßeinheit während des Meßvorgangs bezüglich des Meßobjektes an derselben Stelle. Damit wird gewährleistet, daß lediglich spezifische Beleuchtungswinkel und Empfangswinkel der Meßeinheit die einzigen variablen Meßparameter sind.

Gemäß eines weiteren vorteilhaften Ausführungsbeispiels der Erfindung sind die Meßeinheiten der Meßanordnung kreisförmig angeordnet, was ein Bewegen der Meßeinheiten durch eine Drehbewegung ermöglicht.

Gemäß einer weiteren Ausführungsform der Erfindung sind die Meßeinheiten der Meßanordnung linear angeordnet, um die Meßeinheiten durch eine lineare transversale Bewegung zu verschieben.

Eine weitere sehr vorteilhafte Ausführungsform der Erfindung besteht darin, daß mehrere Lichtquellen über jeweilige Lichtleitungen mit den Meßeinheiten koppelbar sind, wodurch eine größere Flexibilität bei der Konstruktion erlangt wird.

Vorteilhafterweise werden mehrere Detektoren gemäß einer weiteren Ausführungsform über jeweilige Lichtleitungen mit den Meßeinheiten gekoppelt, um verschiedene Meßparameter gleichzeitig von mehreren Meßeinheiten und/oder verschiedenen Meßeinheiten abzulesen.

Die Erfindung sowie weitere Ausführungsformen und Vorteile wird bzw. werden nachfolgend unter Bezugnahme auf die Figuren erläutert:
- Fig. 1: eine schematische Ansicht einer Ausführungsform der Meßeinrichtung gemäß der Erfindung,
- Fig. 2: eine Ausführungsform der Anordnung von Meßeinheiten in einer Meßeinrichtung,
- Fig. 3: eine Skizze einer weiteren Ausführungsform der Meßeinrichtung.

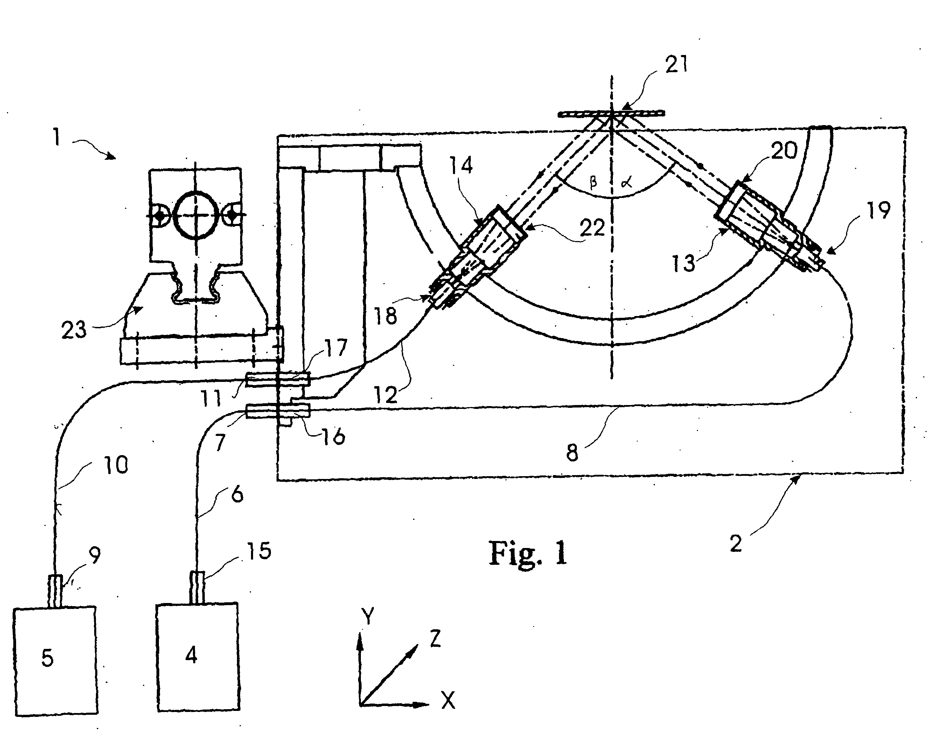

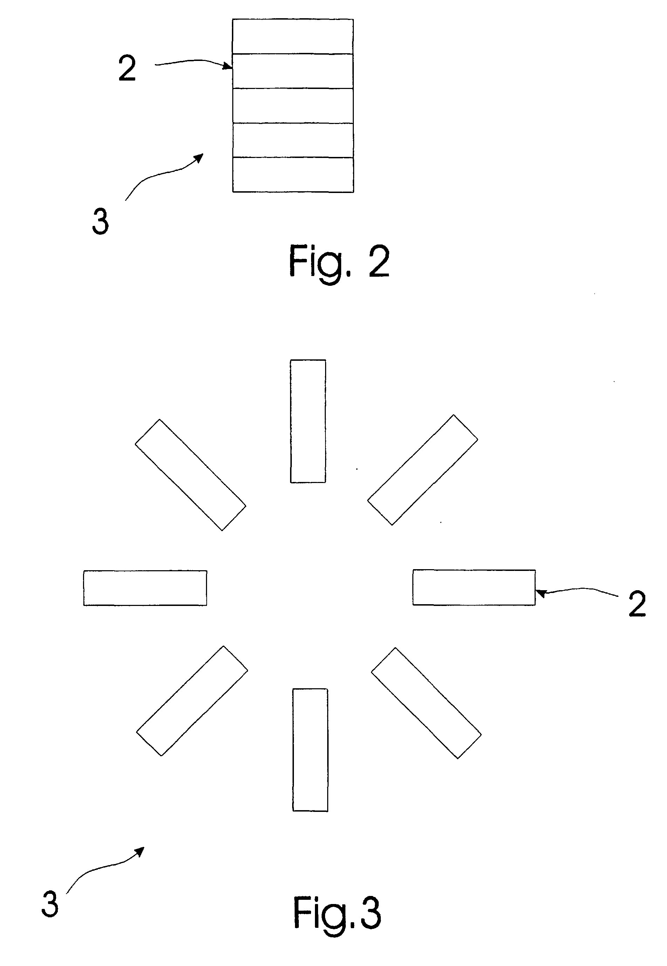

Bezugnehmend auf die Fig. 1 wird eine Meßeinrichtung 1 für die winkelabhängige Messung von Farbcharakteristiken von Lacken und Farben beschrieben. Die Meßeinrichtung 1 weist mehrere Meßeinheiten 2 auf, die in einer Meßanordnung 3 (siehe Fig. 2 und 3) zusammengefaßt sind. Die Meßeinrichtung 1 weist weiterhin eine Lichtquelle 4 und einen Detektor 5 auf. Bei der Lichtquelle 4 handelt es sich im bevorzugten Ausführungsbeispiel um eine Halogenlichtquelle 4, die Licht in ein Ende 15 eines Lichtleiters 6 koppelt. Der Lichtleiter 6 dient als Beleuchtungsfaser und kann an seinem anderen Ende 7 mit einem Lichtleiter 8 der Meßeinheit 2 gekoppelt werden. Der Detektor 5 ist im bevorzugten Ausführungsbeispiel ein Dioden-Zeilenspektrometer. Das Spektrometer 5 ist an ein Ende 9 eines Lichtleiters 10 gekoppelt. Der Lichtleiter 10 dient als Empfangsfaser und dessen anderes Ende 11 ist, ähnlich wie der Lichtleiter 6, an einen Lichtleiter 12 der Meßeinheit 2 gekoppelt werden.

Die Meßeinheit 2 umfaßt zwei optische Meßköpfe, einen Beleuchtungsmeßkopf oder Sender 13 und einem Empfangsmeßkopf oder Empfänger 14. Der Sender 13 ist mit einem Sendelichtleiter 8 bei 19 verbunden, wobei der Sendelichtleiter 8 den Sender mit Lichtleiteranschlüssen 16, 17 der Meßeinheit 2 verbindet. Ebenso ist der Empfänger 14 mit einem Ende 18 eines Empfängerlichtleiters 12 verbunden, wobei der Empfängerlichtleiter 12 zu einem Lichtleiteranschluß 17 der Meßeinheit führt. Bei entsprechender Positionierung der Meßeinheit 2 liegen die Enden 7, 11 der Lichtquellen- und Detektorlichtleiter 6, 10 vor den entsprechenden Enden 16, 17 der Sender und Empfängerlichtleiter 8, 12. In dieser Konfiguration wird Licht aus dem Lichtquellenlichtleiter 6 in den Senderlichtleiter 8 und Licht aus dem Empfängerlichtleiter 12 in den Detektorlichtleiter 10 gekoppelt. Bei einem weiteren Ausführungsbeispiel der Erfindung könnte anstatt einer direkten Ankopplung der Faserenden 11, 6 und 12, 10 aneinander durch einen geringen Abstand, die Ankopplung auch über abbildende Optiken ausgeführt werden.

Bei entsprechender Kopplung des Senders 13 an die Lichtquelle 4 wird das aus dem Senderlichtleiter 8 austretende Licht über eine Optik 20 im Sender 13 parallelisiert und beleuchtet ein der Meßeinheit 2 vorgelagertes Meßobjekt 21 unter einem Winkel α. Ein Teil des an dem Objekt 21 zurückgestreuten Lichts trifft auf den Empfänger 14 in einem Winkel β und wird von einer Optik 22 des Empfängers 14 auf das Ende 18 des Empfangslichtleiters 12 abgebildet. Bei entsprechender Kopplung des Empfängers 14 an den Detektor 5 wird das von dem Meßobjekt reflektierte Licht zu dem Detektor 5 geführt und dort spektral gemessen. Die Farbwerte können somit in Abhängigkeit von dem Beleuchtungswinkel α und dem Empfangswinkel β ermittelt werden.

Wie bereits zuvor erwähnt, ist die Anzahl der Meßeinheiten 2 prinzipiell beliebig. Die in der Meßanordnung 3 zusammengefaßten Meßeinheiten 2 können, wie in der Fig. 2 dargestellt, einen Stapel bilden. Gemäß einer weiteren Ausführungsform der vorliegenden Erfindung werden die Meßeinheiten 2 ringförmig, wie in Fig. 3 zu sehen, zu der Meßanordnung 3 angeordnet. Die einzelnen Meßeinheiten 2 sind prinzipiell baugleich, unterscheiden sich jedoch in dem Beleuchtungs- und Empfangswinkel des Senders 13 und Empfängers 14 bezüglich des Meßobjekts 21 für jede Meßeinheit 2. Die Meßanordnung 3 ist beweglich angeordnet und kann als eine gesamte starre Einheit von einer Lineareinheit 23 transversal in z-Richtung (siehe Fig. 1), d. h. senkrecht zur Zeichnungsebene bewegt werden. Durch diese Transversalbewegung kann eine beliebige Meßeinheit 2 unter das Meßobjekt 22 gefahren werden (auch genannt Meßkopfmultiplex), wobei durch diese Verschiebung gleichzeitig die freien Lichtleiterenden 16, 17 der Sender und Empfängerlichtleiter 8, 12 der Meßeinheit 2 an die Lichtquellen- und Detektorlichtleiter 6,10 angekoppelt werden (was als Fasermultiplexing bezeichnet wird).

Statt einer Lineareinheit kann für die oben beschriebene Kombination von Meßkopfmultiplexing und Fasermultiplexing auch eine Dreheinheit (nicht gezeigt) verwendet werden, die eine Meßanordnung 3, wie sie in der Fig. 3 gezeigt wird, rotiert. Dabei ist die maximale Anzahl von Meßeinheiten 2 jedoch durch den zur Verfügung stehenden Gesamtdrehwinkel von 360° begrenzt.

Die oben beschriebene Meßeinrichtung 1 bietet somit die Möglichkeit, schnell und gegebenenfalls auch automatisch zwischen verschiedenen Meßgeometrien zu wechseln. Durch ein Verschieben der Meßanordnung 3 werden verschiedene Meßeinheiten 2 mit dem Detektor 5 und der Lichtquelle 4 gekoppelt und für die Messung eingesetzt.

Gegenüber herkömmlichen Meßsystemen bilden die Komponenten jeder Meßeinheit 2 eine starre Einheit. Insbesondere sind die Sende- bzw. Empfängerlichtleiter 8, 12 fest innerhalb der Meßeinheit 2 montiert. Somit ist gewährleistet, daß bei einer Bewegung der Meßanordnung 3 keine Änderung der Biegekurven der Sende- und Empfängerlichtleiter 12, 8 hervorgerufen wird. Die erfindungsgemäße Meßeinrichtung 1 ermöglicht somit eine Mehrwinkelfarbmessung durch den Einsatz der individuell konfigurierten Meßeinheiten 2, ohne dabei durch etwaige Veränderungen der Position der Lichtleiter Veränderungen in den Biegekurven derselbigen zu verursachen. Veränderungen in der spektralen Transmission der Lichtleiter 6, 10, 8, 12, die sich auf die Genauigkeit der Farbwertbestimmung nachteilig auswirken, sind somit ausgeschlossen.

Gemäß dem obigen bevorzugten Ausführungsbeispiel kann vorteilhafterweise lediglich eine Lichtquelle 4 und ein Detektor 5 selektiv an alle Meßeinheiten 2 gekoppelt werden. Vorzugsweise können gemäß weiteren Ausführungsformen der vorliegenden Erfindung jedoch mehrere Lichtquellen 4 bzw. Detektoren 5 mit jeweiligen Lichtleitern an die Meßeinheiten 2 und deren jeweiligen Anschlüsse 16, 17 gekoppelt werden, um verschiedenartige Leuchtquellen 4, unterschiedliche Detektoren 5 zur Messung von einer Vielzahl von Parametern, und/oder Redundanz in einer Messung vorzusehen.

## Patentansprüche

1. Messeinrichtung (1) zum Messen der Farbcharakteristiken eines Messobjekts (21) mit mindestens einer, mindestens einen optischen Sender (13) und mindestens einen optischen Empfänger (14) aufweisenden Messeinheit (2) und mindestens einer mit der Messeinheit (2) über einen Lichtleiter (6) verbundenen Lichtquelle (4) sowie einem mit der Messeinheit (2) Ober einen Lichtleiter (10) verbundenen Detektor (5),
**dadurch gekennzeichnet, daß**
mindestens zwei Messeinheiten (2) zu einer Messanordnung (3) zusammengefaßt sind, die Messeinheiten (2) jeweils Lichtleiter-Anschlüsse (16, 17) aufweisen und diese Anschlüsse (16, 17) mit einer für mindestens zwei Messeinheiten (2) gemeinsam verbindbaren Lichtquelle (4) bzw. einem für mindestens zwei Messeinheiten (2) gemeinsam verbindbaren Detektor (5) wahlweise koppelbar sind,
wobei der Beleuchtungs- und Empfangswinkel (α, β) des Senders (13) und Empfängers (14) bezüglich des Messobjekts (21) für jede Messeinheit (2) unterschiedlich ist.

2. Messeinrichtung (1) nach Anspruch 1 , **dadurch gekennzeichnet, daß** jeder Sender (13) und jeder Empfänger (14) einer Messeinheit jeweils über einen Sender- bzw. Empfangs-Lichtleiter (8, 12) mit dem jeweiligen Anschluß (16, 17) verbunden ist.

3. Messeinrichtung (1) nach einem der vorhergehenden Ansprüche, **dadurch gekennzeichnet, daß** die Lichtleiter (8, 12) in der Messeinheit (2) starr verlegt sind.

4. Messeinrichtung (1) nach einem der vorhergehenden Ansprüche, **dadurch gekennzeichnet, daß** wenigstens ein Lichtquellen- und Detektor-Lichtleiter (6, 10) berührungsfrei mit dem jeweiligen Anschluß (16, 17) einer Messeinheit (2) gekoppelt ist.

5. Messeinrichtung (1) nach einem der Ansprüche 1 bis 3, **dadurch gekennzeichnet, daß** zwischen dem Lichtquellen- und Detektor-Lichtleiter (6, 10) einerseits und den Anschlüssen (16, 17) der Messeinheit (2) eine optische Kopplungseinrichtung vorgesehen ist.

6. Messeinrichtung (1) nach einem der vorhergehenden Ansprüche, **dadurch gekennzeichnet, daß** die Messanordnung (3) bezüglich des Messobjekts (21) beweglich angeordnet ist.

7. Messeinrichtung (1) nach Anspruch 6, **dadurch gekennzeichnet, daß** die Bewegung linear ist.

8. Messeinrichtung (1) nach Anspruch 6, **dadurch gekennzeichnet, daß** die Bewegung eine Drehbewegung ist.

9. Messeinrichtung (1) nach einem der vorhergehenden Ansprüche, **dadurch gekennzeichnet, daß** der Lichtquellen- und Detektor-Lichtleiter (6, 10) bei Bewegung der Messanordnung (3) mit jeweiligen Anschlüssen (16, 17) unterschiedlicher Messeinheiten (2) gekoppelt ist.

10. Messeinrichtung (1) nach einem der vorhergehenden Ansprüche, **dadurch gekennzeichnet, daß** sich die jeweilige Messeinheit (2) während des Messvorgangs bezüglich des Messobjekts (21) an der selben Stelle befindet.

11. Messeinrichtung (1) nach einem der vorhergehenden Ansprüche, **dadurch gekennzeichnet, daß** die Messeinheiten (2) der Messanordnung (3) kreisförmig angeordnet sind.

12. Messeinrichtung (1) nach einem der vorhergehenden Ansprüche, **dadurch gekennzeichnet, daß** die Messeinheiten (2) der Messanordnung (3) linear angeordnet sind.

13. Messeinrichtung (1) nach einem der vorhergehenden Ansprüche, **dadurch gekennzeichnet, daß** mehrere Lichtquellen (4) über jeweilige Lichtleiter mit den Messeinheiten (2) koppelbar sind.

14. Messeinrichtung (1) nach einem der vorherigen Ansprüche, **dadurch gekennzeichnet, daß** mehrere Detektoren (5) über jeweilige Lichtleiter mit den Messeinheiten (2) koppelbar sind.

## Claims

1. Measuring device (1) for measuring the colour characteristics of an object (21) to be measured, comprising at least one measuring unit (2), which has at least one optical transmitter (13) and at least one optical receiver (14), and at least one light source (4), which is connected with the measuring unit (2) by way of an optical conductor (6), as well as a detector (5), which is connected with the measuring unit (2) by way of an optical conductor (10), **characterised in that** at least two measuring units (2) are combined to form a measuring arrangement (3), the measuring units (2) each have respective optical conductor connections (16, 17) and these connections (16, 17) can be selectively coupled with a light source (4), which is connectible for at least two measuring units (2) in common, or a detector (5), which is connectible for at least two measuring units (2) in common, wherein the illumination angle (α) and reception angle (β) of the transmitter (13) and receiver (14) are different with respect to the object (21), which is to be measured, for each measuring unit (2).

2. Measuring device (1) according to claim 1, **characterised in that** each transmitter (13) and each receiver (14) of a measuring unit is connected by way of a respective transmitter optical conductor (8) or receiver optical conductor (12) with the respective connection (16, 17).

3. Measuring device (1) according to one of the preceding claims, **characterised in that** the optical conductors (8, 12) of the measuring unit (2) are rigidly installed.

4. Measuring device (1) according to one of the preceding claims, **characterised in that** at least one light source conductor (6) and detector optical conductor (10) is coupled in contact-free manner with the respective connection (16, 17) of the measuring unit (2).

5. Measuring device (1) according to one of claims 1 to 3, **characterised in that** an optical coupling device is provided between the light source optical conductor (6) and detector optical conductor (10) on the one hand and the connections (16, 17) of the measuring unit (2).

6. Measuring device (1) according to one of the preceding claims, **characterised in that** the measuring arrangement (3) is arranged to be movable with respect to the object (21) to be measured.

7. Measuring device (1) according to claim 6, **characterised in that** the movement is linear.

8. Measuring device (1) according to claim 6, **characterised in that** the movement is a rotational movement.

9. Measuring device (1) according to one of the preceding claims, **characterised in that** the light source optical conductor (6) and detector optical conductor (10) are coupled with respective connections (16, 17) of different measuring units (2) when the measuring arrangement (3) is moved.

10. Measuring device (1) according to one of the preceding claims, **characterised in that** the respective measuring unit (2) is disposed at the same position with respect to the object (21), which is to be measured, during the measuring process.

11. Measuring device (1) according to one of the preceding claims, **characterised in that** the measuring units (2) of the measuring arrangement (3) are arranged to be circular.

12. Measuring device (1) according to one of the preceding claims, **characterised in that** the measuring units (2) of the measuring arrangement (3) are arranged to be linear.

13. Measuring device (1) according to one of the preceding claims, **characterised in that** several light sources (4) can be coupled with the measuring units (2) by way of respective optical conductors.

14. Measuring device (1) according to one of the preceding claims, **characterised in that** several detectors (5) can be coupled with the measuring units (2) by way of respective optical conductors.

## Revendications

1. Installation de mesure (1) pour mesurer les caractéristiques de couleur d'un objet de mesure (21) avec au moins une unité de mesure (2) présentant au moins un émetteur optique (13) et au moins un récepteur optique (14) et au moins une source de lumière (4) reliée à l'unité de mesure (2) par un conducteur de lumière (6) ainsi qu'un détecteur (5) relié à l'unité de mesure (2) par un conducteur de lumière (10),
**caractérisée en ce que**
au moins deux unités de mesure (2) sont réunies en un agencement de mesure (3), **en ce que** les unités de mesure (2) présentent chacune des connexions (16, 17) de conducteur de lumière et que ces connexions (16, 17) peuvent être couplées sélectivement à une source de lumière (4) pouvant être reliée conjointement à au moins deux unités de mesure (2) respectivement à un détecteur (5) pouvant être relié conjointement à au moins deux unités de mesure (2),
où l'angle d'éclairage et de réception (αβ) de l'émetteur (13) et du récepteur (14) diffère par rapport à l'objet de mesure (21) pour chaque unité de mesure (2).

2. Installation de mesure (1) selon la revendication 1, **caractérisée en ce que** chaque émetteur (13) et chaque récepteur (14) d'une unité de mesure est relié à chaque fois par un conducteur de lumière d'émetteur ou de récepteur (8, 12) à la connexion respective (16, 17).

3. Installation de mesure (1) selon l'une des revendications précédentes, **caractérisée en ce que** les conducteurs de lumière (8, 12) sont posés rigidement dans l'unité de mesure (2).

4. Installation de mesure (1) selon l'une des revendications précédentes, **caractérisée en ce qu'**au moins un conducteur de lumière de source de lumière et de détecteur (6, 10) est couplé sans contact à la connexion respective (16, 17) d'une unité de mesure (2).

5. Installation de mesure (1) selon l'une des revendications 1 à 3, **caractérisée en ce qu'**il est prévu entre le conducteur de lumière (6, 10) de la source de lumière et du détecteur, d'une part, et les connexions (16, 17) de l'unité de mesure (2) une installation de couplage optique.

6. Installation de mesure (1) selon l'une des revendications précédentes, **caractérisée en ce que** l'agencement de mesure (3) est disposé d'une manière mobile par rapport à l'objet de mesure (21).

7. Installation de mesure (1) selon la revendication 6, **caractérisé en ce que** le déplacement est linéaire.

8. Installation de mesure (1) selon la revendication 6, **caractérisée en ce que** le déplacement est un mouvement de rotation.

9. Installation de mesure (1) selon l'une des revendications précédentes, **caractérisée en ce que** le conducteur de lumière (6, 10) de la source de lumière et du détecteur, lors d'un déplacement de l'agencement de mesure (3), est couplé aux connexions respectives (16, 17) d'unités de mesure différentes (2).

10. Installation de mesure (1) selon l'une des revendications précédentes, **caractérisée en ce que** l'unité de mesure respective (2), pendant l'opération de mesure, se trouve au même emplacement relativement à l'objet de mesure (21).

11. Installation de mesure (1) selon l'une des revendications précédentes, **caractérisée en ce que** les unités de mesure (2) de l'agencement de mesure (3) sont disposées en forme de cercle.

12. Installation de mesure (1) selon l'une des revendications précédentes, **caractérisée en ce que** les unités de mesure (2) de l'agencement de mesure (3) sont disposées d'une manière linéaire.

13. Installation de mesure (1) selon l'une des revendications précédentes, **caractérisée en ce que** plusieurs sources de lumière (4) peuvent être couplées par des conducteurs de lumière respectifs aux unités de mesure (2).

14. Installation de mesure (1) selon l'une des revendications précédentes, **caractérisée en ce que** plusieurs détecteurs (5) peuvent être couplés par des conducteurs de lumière respectifs aux unités de mesure (2).
